(19) Europäisches Patentamt
European Patent Office
Office européen des brevets

(11) **EP 3 167 241 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(21) Anmeldenummer: **15749728.0**

(22) Anmeldetag: **06.07.2015**

(51) Int Cl.:
**G01C 7/04** (2006.01)     **B60W 40/06** (2012.01)
**G01B 21/30** (2006.01)

(86) Internationale Anmeldenummer:
**PCT/EP2015/065310**

(87) Internationale Veröffentlichungsnummer:
**WO 2016/005310 (14.01.2016 Gazette 2016/02)**

(54) **VERFAHREN ZUR VERARBEITUNG VON DATEN EINES FAHRSTRECKENPROFILS, CODIER- UND DECODIERVERFAHREN, SYSTEM, COMPUTERPROGRAMM UND COMPUTERPROGRAMMPRODUKT**

PROCES FOR PROCESSING DATA OF A ROAD PROFILE, CODING AND DECODING PROCESS, SYSTEM, COMPUTER PROGRAM AND COMPUTER PROGRAM PRODUCT

PROCÉDURE POUR TRAITER DES DONNÉES D'UN PROFIL D'UNE ROUTE, PROCÉDURE DE CODAGE ET DE DÉCODAGE, SYSTÈME, PROGRAMME D'ORDINATEUR ET PRODUIT DE PROGRAMME D'ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2014 DE 102014213326**

(43) Veröffentlichungstag der Anmeldung:
**17.05.2017 Patentblatt 2017/20**

(73) Patentinhaber: **Bayerische Motoren Werke Aktiengesellschaft**
**80809 München (DE)**

(72) Erfinder: **AUGST, Alexander**
**80937 Muenchen (DE)**

(56) Entgegenhaltungen:
DE-A1-102006 057 342     DE-A1-102012 009 674
DE-T2- 60 019 799

• I Kertesz ET AL: "MEASUREMENT OF ROAD ROUGHNESS BY LOW-COST PHOTOGRAMMETRIC SYSTEM", , 29. Mai 2007 (2007-05-29), XP055221423, Gefunden im Internet: URL:http://www.isprs.org/proceedings/XXXVI/5-C55/papers/kertesz_imre.pdf [gefunden am 2015-10-15]
• BEN BRUSCELLA ET AL: "Analysis of Road Surface Profiles", JOURNAL OF TRANSPORTATION ENGINEERING, THE SOCIETY, NEW YORK, NY, US, Bd. 125, Nr. 1, 1. Januar 1999 (1999-01-01), Seiten 55-59, XP008177799, ISSN: 0733-947X, DOI: 10.1061/(ASCE)0733-947X(1999)125:1(55)
• HOLZAPFEL W ET AL: "ROAD PROFILE RECOGNITION FOR AUTONOMOUS CAR NAVIGATION AND NAVSTAR GPS SUPPORT", IEEE TRANSACTIONS ON AEROSPACE AND ELECTRONIC SYSTEMS, IEEE SERVICE CENTER, PISCATAWAY, NJ, US, Bd. 39, Nr. 1, 2. Oktober 2002 (2002-10-02), Seiten 2-12, XP001158255, ISSN: 0018-9251, DOI: 10.1109/TAES.2003.1188890

EP 3 167 241 B1

**Beschreibung**

Die Erfindung betrifft ein Verfahren zur Verarbeitung von Daten eines Fahrstreckenprofils nach dem Oberbegriff des Anspruchs 1. Die Erfindung betrifft des Weiteren ein entsprechendes Codier- und Decodierverfahren. Die Erfindung betrifft des Weiteren ein System, ein Computerprogramm und ein Computerprogrammprodukt.

Ein Verfahren nach dem Oberbegriff des Anspruchs 1 ist grundsätzlich in einem im internet unter der URL http://www.isprs.ora/proceedinas/XXXVI/5-C55/papers/kertesz imre.pdf auffindbaren Beitrag von I Kertesz et al mit dem Titel "MEASUREMENT OF ROAD ROUGHNESS BY LOW-COST PHOTO-GRAMMETRIC SYSTEM" beschrieben.

Aufgabe der vorliegenden Erfindung ist es, ein entsprechendes Verfahren und ein System zu schaffen, die dazu beitragen, dass Daten eines Fahrstreckenprofils, die lokale physikalische Eigenschaften eines Fahrstreckenprofils repräsentieren, besonders effizient verarbeitet werden.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich aus durch ein Verfahren zur Verarbeitung von Daten eines Fahrstreckenprofils nach Anspruch 1. Die Erfindung zeichnet sich aus des Weiteren durch ein zu dem Verfahren korrespondierendes System nach Anspruch 16.

Es wird eine Positionsinformation ermittelt, die repräsentativ ist für eine globale Position des Fahrstreckenabschnitts. Es werden Fahrstreckenprofildaten ermittelt, die repräsentativ sind für lokale physikalische Fahrbahneigenschaften des Fahrstreckenabschnitts. Abhängig von den Fahrstreckenprofildaten wird eine Spektralverteilung ermittelt, in Bezug auf eine Größe, die eine Ortsinformation repräsentiert. Die Spektralverteilung wird der Positionsinformation zugeordnet.

Durch die Ermittlung der Spektralverteilung können an sich extrem umfangreiche Daten, wie zum Beispiel eine Verteilung von Parametern, wie zum Beispiel Höhenunterschiede über eine Fahrstrecke, in eine sehr kompakte Form gebracht werden.

Die Spektralverteilung mit der zugeordneten Positionsinformation kann anschließend beispielsweise übertragen werden, beispielsweise an einen Server und/oder ein Fahrzeug, beispielsweise in Form einer kontinuierlichen Übertragung als Datenstrom. Insbesondere umfasst die Übertragung eine drahtlose Übertragung in Form von mehreren Datenpaketen. Dabei kann eine Aufteilung der Daten in Datenpakete bevorzugt in Abhängigkeit von dem Bezug der Daten zu bestimmten Fahrstreckenprofilen erfolgen.

Alternativ oder zusätzlich kann die Spektralverteilung mit der zugeordneten Positionsinformation anschließend dauerhaft gespeichert werden.

Alternativ oder zusätzlich kann die Spektralverteilung mit der zugeordneten Positionsinformation weiterverarbeitet werden zum Beispiel im Rahmen einer anzeigenden Funktion und/oder im Rahmen einer Fahrerassistenzfunktion eines Fahrzeugs, wobei eine Steuerung einer Größe im Fahrzeug, insbesondere einer Größe, die die Längsdynamik, Querdynamik oder Vertikaldynamik des Fahrzeugs beeinflusst, in Abhängigkeit von der Spektralverteilung mit der zugeordneten Positionsinformation erfolgt.

Die Spektralverteilung wird insbesondere mittels einer zeitdiskreten Fourier-Analyse ermittelt, insbesondere mittels einer Fourier-Transformation. Als Fourier-Transformation ist hier zusammenfassend eine Methode der Fourier-Analyse bezeichnet, die es erlaubt, kontinuierliche, aperiodische Signale in ein kontinuierliches Spektrum zu zerlegen. Die Funktion, die dieses Spektrum beschreibt, wird auch bezeichnet als Fourier-Transformierte oder Spektralfunktion. Im Wesentlichen umfasst die Ermittlung der Spektralverteilung die Bildung einer Spektralfunktion bevorzugt mit diskreten Formen der Fourier-Analyse, beispielsweise mittels einer schnellen Fourier-Transformation (FFT), einer Cosinustransformation und/oder einer modifizierten diskreten Cosinustransformation (MDCT), insbesondere aufgelöst nach einem Ort.

Die Streckenprofildaten sind insbesondere repräsentativ für einen Verlauf einer physikalischen Fahrbahneigenschaft bezogen auf die Größe, die die Ortsinformation repräsentiert, für welche an späterer Stelle noch mehrere Ausführungsformen angegeben sind..

Bei einem Fahrstreckenabschnitt kann es sich bevorzugt um Straßen- oder Fahrspuren handeln. Alternativ oder zusätzlich kann der Fahrstreckenabschnitt ein beliebig geformtes und ausgedehntes Gelände oder Boden sein mit oder ohne künstlich geschaffene Merkmale, z.B. einer Infrastruktur.

Bevorzugt umfassen die lokalen physikalischen Fahrbahneigenschaften zumindest eine lokale Verteilung vorgegebener geometrischer Größen innerhalb des Fahrstreckenabschnitts. Diese können bevorzugt zumindest eine Verteilung bestimmter Oberflächeneigenschaften, bevorzugt ein Höhenprofil umfassen. Darüber hinaus ist die Verarbeitung weiterer permanenter oder zeitabhängiger Größen, die einen Fahrstreckenabschnitt kennzeichnen, möglich und vorteilhaft.

Die lokalen physikalischen Fahrbahneigenschaften können sich bevorzugt auf einen Fahrstreckenabschnitt oder auf einen Teil eines Fahrstreckenprofils oder einer Fahrstrecke mit einer horizontalen Ausdehnung von beispielsweise 0 - 100 Meter beziehen, besonders bevorzugt auf ca. 10 Meter.

Das erfindungsgemäße Verfahren kann das Ermitteln einer asynchronen Funktion umfassen, welche die Fahrstreckenprofildaten repräsentiert. Dabei kann z.B. auch ein wesentlicher Teil der, z.B. sensorisch erfassten Fahrstreckenprofildaten, die lokale physikalische Fahrbahneigenschaften repräsentieren, in Form einer asynchronen Funktion ermittelt oder überführt werden, die sich bevorzugt auf eine Größe bezieht, die die Ortsinformation repräsentiert. Bevorzugt kann dabei die asynchrone Funktion die Unterschiede lokaler Fahrbahneigenschaften, von einer Bezugsgröße repräsentieren.

Dabei kann die asynchrone Funktion diskret oder kontinuierlich sein und eine Differenz einer quantitativen Größe die repräsentativ ist für lokale physikalische Fahrbahneigenschaften des Fahrstreckenabschnitts zu einer Bezugsgröße repräsentieren. Die Bezugsgröße kann dabei einen ggf. vorhandenen synchronen Anteil der Daten darstellen, bevorzugt einen additiven Gleichanteil der Fahrstreckenprofildaten des Fahrstreckenabschnitts. Ein solcher synchroner Anteil kann sich auf globale, z.B. durchschnittliche oder statistische physikalische Fahrbahneigenschaften innerhalb einer Fahrstrecke oder des Fahrstreckenabschnitts beziehen.

Die Bezugsgröße kann dabei ortsabhängig veränderlich sein oder selbst als eine Funktion von einer Größe, die eine Ortsinformation repräsentiert dargestellt werden. Bevorzugt kann eine solche Bezugsgröße in Abhängigkeit von einem integralen und/oder mittleren und/oder tiefpassgefilterten Wert der lokalen physikalischen Eigenschaft innerhalb eines Fahrstreckenprofils ermittelt werden. Alternativ oder zusätzlich kann die Bezugsgröße, insbesondere mehrere Werte für verschiedene Fahrstreckenabschnitte, der entsprechenden Spektralverteilung oder der entsprechenden Positionsinformation zugeordnet werden.

Somit ergibt sich auch eine vorteilhafte, insbesondere unmittelbare Anwendbarkeit der Fourier-Analyse auf die Fahrstreckenprofildaten. Die entsprechenden Werte der Bezugsgröße (des jeweiligen ggf. vorhandenen Gleichanteils) können in Abhängigkeit von der Größe die eine Ortsinformation repräsentiert, zusammen oder getrennt von der ermittelten Spektralverteilung weiterverarbeitet, gespeichert oder gesendet werden.

Je nach Art der Fahrstreckenprofildaten oder Art ihres Ermittelns, z.B. mittels eines Sensors, können diese bereits als eine asynchrone Funktion vorliegen. Daher kann das Überführen der Fahrstreckenprofildaten in Form einer solchen asynchronen Funktion in Abhängigkeit der Art der Fahrstreckenprofildaten und/oder des Verfahrens mit dem diese ermittelt werden, durchgeführt werden.

Die Positionsinformation kann eine Position des Fahrstreckenabschnitts in einem globalen Koordinatensystem, z.B. GPS, Galileo, etc. umfassen. Außerdem kann die Positionsinformation auch bevorzugt eine Ausrichtung innerhalb des Fahrstreckenabschnitts in Relation zu einem Weltkoordinatensystem bzw. nach Himmelsrichtungen, etc. umfassen. Die Positionsinformation kann beispielsweise auch zusätzlich eine Position und/oder Ausrichtung einer jeweiligen lokalen physikalischen Eigenschaft in Relation zu Spurmarkierungen und/oder Infrastrukturvorrichtungen (z.B. Leitplanken), insbesondere innerhalb eines Fahrstreckenabschnitts, umfassen, die sich dabei insbesondere auf einen oder mehrere markanten Punkte und/oder Linien und/oder Formen des Fahrstreckenabschnitts beziehen. Zum Beispiel kann diese Information auch eine relative Position mit einem Bezug zu der Spurmitte eines Straßenabschnitts aufweisen.

Die Zuordnung zu der Positionsinformation kann beispielsweise derart hergestellt werden, dass zu jedem Fahrstreckenabschnitt von kleiner als z.B. ca. 10 Meter, 20 Meter, 30 Meter, 100 Meter, zu dem die Spektralverteilung ermittelt wurde, zumindest eine Information der Positionsinformation zugeordnet wird, wie zum Beispiel die globale Position, und/oder zu jedem Fahrstreckenabschnitt von kleiner als, z.B. 1 Meter, 2 Meter, 3 Meter, 10 Meter zumindest eine Information der Positionsinformation zugeordnet wird, wie zum Beispiel eine relative Position des Fahrstreckenabschnitts.

Die Zuordnung kann bevorzugt durch eine Einbindung von mehreren Daten, die die Positionsinformation repräsentieren in die Daten, bzw. Datenpakete die aus der Spektralverteilung gewonnen werden, erfolgen. Der Bezug kann auch durch eine Verlinkung oder eine Look-Up-Tabelle oder eine vorausbestimmte Zuordnungsfunktion zwischen den Daten, die die Spektralverteilung repräsentieren und die die entsprechende Positionsinformation repräsentieren, erfolgen.

Beispielsweise werden für die Zuordnung Daten für die Spektralverteilung und Daten, die eine dazugehörige Positionsinformation, die jeweils dieselben Fahrstreckenabschnitt repräsentieren, zusammen oder in zugeordneten Dateien bzw. Datenpakete gespeichert oder weiterverarbeitet. Diese Daten können einen diskreten Satz von Spektralverteilungen umfassen, die in einem Fahrstreckenabschnitt z.B. dominieren oder eine vorausbestimmte Schwelle überschreiten.

Die ermittelte Spektralverteilung kann beispielsweise genutzt werden für einen Ausgleich von Fahrzeugvibrationen bei Straßenunebenheiten zur Komfort-Erhöhung.

Die ermittelte Spektralverteilung kann alternativ oder zusätzlich genutzt werden für eine Fahrwerk-Konditionierung auf Unebenheiten und Besonderheiten des aktuell befahrenden Fahrstreckenabschnitts, beispielsweise zur Steuerung einzelner Ventile von Vertikaldynamik-Aktuatorik oder weiterer Aktuatorik des Fahrzeugs. Bei einer solchen Nutzung der Spektralverteilung können konkrete lokale physikalische Eigenschaften des Fahrstreckenabschnitts, einschließlich ihrer jeweiligen konkreten Positionsinformation bei den Regelvorgängen in einem Fahrzeug, die sich auf ihre jeweilige Position beziehen, berücksichtigt werden.

Die ermittelte Spektralverteilung kann alternativ oder zusätzlich zur Erhöhung von Komfort oder Sicherheit genutzt werden, insbesondere für eine Vermeidung bestimmter Fahrstreckeneigenschaften, die zusammen bestimmte Artefakte bilden, wie zum Beispiel von Schlaglöchern, schrägen Straßenabschnitten und ähnlichem. Dabei kann eine gezielte, insbesondere zumindest teilautomatische Vermeidung der Auswirkungen solcher Artefakte auf die Fahrgastzelle eines Fahrzeugs oder auf das Fahrzeug erfolgen, selbst wenn diese nicht sichtbar, z.B. verdeckt oder z.B. vom Wasser oder Schnee bedeckt sind.

Die ermittelte Spektralverteilung kann alternativ oder zusätzlich genutzt werden für eine komfortable bzw. sichere Lenkrad-Rückkopplung und/oder Entkopplung, beispielsweise indem Straßenunebenheiten das Lenkrad nicht verdrehen und der Fahrzeugführer eine passende angenehme Rückkopplung erhält. Dies erfolgt beispielsweise dadurch, dass die Lenkrad- Rückkopplung und/oder Entkopplung abhängig von der Spektralverteilung gesteuert wird.

Die ermittelte Spektralverteilung kann alternativ oder zusätzlich genutzt werden um für einen Fahrzeugführer eine Strecke, insbesondere eine Offroad-Strecke, mit gewünschten physikalischen Fahrbahneigenschaften, zu ermitteln.

Die ermittelte Spektralverteilung kann alternativ oder zusätzlich genutzt werden für einen unmittelbaren oder mittelbaren Austausch mit anderen Fahrzeugen.

Die ermittelte Spektralverteilung kann alternativ oder zusätzlich genutzt werden zur Speicherung eines Erfahrungswerts eines Fahrzeugs mit verschiedener Beladung oder mehrerer Fahrzeuge unterschiedlicher Bauart.

Die ermittelte Spektralverteilung kann alternativ oder zusätzlich genutzt werden für eine zukünftige Fahrzeugoptimierung. Dabei können Datensätze, z.B. Parametersätze für das Fahrwerk des Fahrzeugs, die in Abhängigkeit von der Spektralverteilung ermittelt oder zugeordnet werden, wobei das Verhalten des Fahrzeugs unter Berücksichtigung konkreter Fahrstreckenprofildaten, insbesondere konkreter lokalen physikalischen Eigenschaften an ihrer jeweiligen Position, auf eine vorgegebene Weise optimiert wird. Dabei werden diese Funktionen eines Fahrzeugs in Abhängigkeit von Daten, die aus der Spektralverteilung und bevorzugt aus der dieser zugeordneten Positionsinformation ermittelt werden, ausgeführt bzw. gesteuert oder geregelt.

Auch können in Abhängigkeit von der ermittelten Spektralverteilung Konstruktionsmaßnahmen für die nächste Generation des Fahrzeugs abgeleitet oder optimiert werden.

Gemäß einer vorteilhaften Ausgestaltung ist die Spektralverteilung repräsentativ ist für eine Ortsfrequenzverteilung.

Hierdurch repräsentiert die Spektralverteilung direkt Ortsfrequenzen, so dass die Daten der Spektralverteilung gegebenenfalls ohne weitere Umrechnung genutzt werden können.

Gemäß einer weiteren vorteilhaften Ausgestaltung ist die Spektralverteilung repräsentativ ist für eine Zeitfrequenzverteilung.

Auch ist eine Kombination von mehreren Spektralverteilungen vorteilhaft, die in Abhängigkeit derselben oder unterschiedlicher Art bzw. Klasse lokaler physikalischen Fahrstreckeneigenschaften ermittelt werden. Dabei kann zumindest eine Spektralverteilung zumindest teilweise repräsentativ sein für eine Ortsfrequenzverteilung und eine andere repräsentativ sein für eine Zeitfrequenzverteilung. Auch eine Ermittlung zumindest einer Spektralverteilung die für eine Ortsfrequenzverteilung repräsentativ ist in Abhängigkeit von einer Spektralverteilung, die für eine Zeitfrequenzverteilung repräsentativ ist oder umgekehrt, ist z.B. in einem Backend-Computer vorteilhaft.

Gemäß einer weiteren vorteilhaften Ausgestaltung wird die Spektralverteilung der Positionsinformation mittels eines vorgegebenen Koordinatensystems zugeordnet und zwar derart, dass zumindest ein die Ortsinformation repräsentierender Wert einer Länge zugeordnet wird, bezogen auf eine Richtung im Wesentlichen entlang eines Verlaufs einer Fahrstrecke und/oder einer Breite zugeordnet wird, bezogen auf eine Richtung im Wesentlichen senkrecht zu einem Verlauf einer Fahrstrecke.

Hierbei kann beispielsweise ein, die Ortsinformation repräsentierender, Wert die Ortsinformation im Wesentlichen entlang einer Mittellinie einer Fahrbahnmarkierung angeben. Ein anderer, die Ortsinformation repräsentierender, Wert kann beispielsweise die Ortsinformation in Abhängigkeit von dem Abstand eines jeden Punktes im Wesentlichen senkrecht zu dieser Mittellinie angeben.

Alternativ oder zusätzlich kann eine relative Position in dem vorgegebenen Koordinatensystem ermittelt und weiterverarbeitet werden, wobei sich das vorgegebene Koordinatensystem bevorzugt auf einen entsprechenden Fahrstreckenabschnitt bezieht. Das vorgegebene Koordinatensystem und/oder die Positionsinformation kann beispielsweise in eine räumliche Relation einer lokalen physikalischen Fahrbahneigenschaft zu einer Längsrichtung oder Querrichtung eines Fahrstreckenabschnitts innerhalb einer Straße und/oder Spur ermittelt oder verarbeitet werden.

Insbesondere ergibt sich das vorgegebene Koordinatensystem mittels einer Interpolation aus vorausbestimmten Punkten oder Punkten, die mittels einer vorausbestimmten Art ermittelt werden. Die Punkte vorausbestimmter Art können z.B. markante Punkte, z.B. Scheitelpunkte oder Bögenradien oder Bögenmittelpunkte von Straßenkurven sein. Die Interpolation kann z.B. eine stückweise lineare Interpolation oder eine Interpolation zweiter oder dritten Ordnung oder besonders bevorzugt eine Spline-Interpolation sein.

Gemäß einer weiteren vorteilhaften Ausgestaltung sind die Fahrstreckenprofildaten repräsentativ für einen Verlauf der Fahrstreckenhöhe des Fahrstreckenabschnitts.

Dabei kann der Verlauf der Fahrstreckenhöhe eine an sich ortskontinuierliche Funktion umfassen, der bevorzugt als eine ortsdiskrete Funktion erfasst und verarbeitet wird. Die Funktion wird beispielsweise in Abhängigkeit von der Positionsinformation, z.B. in Abhängigkeit von der relativen und/oder globalen Position erfasst, oder dieser Information zugeordnet.

Alternativ oder zusätzlich können mehrere lokale physikalische Fahrbahneigenschaften des Fahrstreckenabschnitts mittels mehrerer, bevorzugt ortskontinuierlich erfasster, Funktionen repräsentiert werden. Diese können innerhalb desselben Ablaufs, auch gleichzeitig oder quasi-gleichzeitig verarbeitet werden.
Dabei kann es sich um mehrere, beispielsweise prinzipiell unterschiedliche Klassen der lokalen physikalischen Fahrbahneigenschaften des Fahrstreckenabschnitts handeln.

Der Verlauf der Fahrstreckenhöhe kann beispielsweise auch relativ zu einer, beispielsweise statisch gebildeten, Bezugshöhe (als Bezugsgröße) ermittelt werden. Die lokalen Werte der Fahrstreckenhöhe können dabei als eine asynchrone Funktion dargestellt werden, die zusammen mit den Daten, die die Bezugshöhe für den entsprechenden Fahrstreckenabschnitt repräsentieren, eine Funktion des Verlaufs der Fahrstreckenhöhe ergibt. Die Bezugshöhe kann dabei beispielsweise im Wesentlichen einem tiefpassgefilterten Wert des Verlaufs der Fahrstreckenhöhe, oder z.B. ihrem Durchschnittswert innerhalb von 10- 100 Meter entsprechen, der beispielsweise mittels Median-Filterung oder anderer statistischer Verfahren ermittelt wird. Dadurch kann eine noch sparsamere Codierung und Decodierung der Spektralverteilung erfolgen, da die sehr vielen datenintensiven Differenzen der Fahrbahnhöhenverlaufs zu einer Bezugsgröße mit einer hohen Auflösung erfasst werden und die Grundlage für die Ermittlung der Spektralverteilung bilden. Die Bezugshöhe kann mit einer ganz wesentlich geringeren Datenmenge ermittelt und der Spektralverteilung z.B. für eine spätere genauere Decodierung, zugeordnet werden.

Gemäß einer weiteren vorteilhaften Ausgestaltung sind die Fahrstreckenprofildaten repräsentativ für einen Verlauf der Neigungswinkel des Fahrstreckenabschnitts.
Der Verlauf der Neigungswinkel kann beispielsweise auch relativ zu einem, beispielsweise statistisch gebildeten, Bezugswinkel ermittelt werden. Der, beispielsweise statistisch gebildete, Bezugswinkel kann dabei beispielsweise ein tiefpassgefilterter Winkel sein, z.B. ein Durchschnittswert innerhalb von 10- 100 Meter, der beispielsweise mittels Median-Filterung oder andere statistischer Verfahren ermittelt wird. Hierdurch kann eine noch sparsamere Codierung und Decodierung der Spektralverteilung erfolgen, da nur eine Differenz zu einem vorausbestimmten Niveau gespeichert wird.

Gemäß einer weiteren vorteilhaften Ausgestaltung wird die Spektralverteilung der Positionsinformation zugeordnet, indem abhängig von der Spektralverteilung und der Positionsinformation eine Spektralverteilungsfunktion ermittelt wird, bei der als Argument eine Größe, die die Ortsinformation repräsentiert einem vorgegebenen Koordinatensystem zugeordnet wird.

Die Spektralverteilungsfunktion repräsentiert somit die Spektralverteilung in Abhängigkeit von der Größe, die die Ortsinformation repräsentiert.

Analog zu Spektralverteilung kann auch die Spektralverteilungsfunktion repräsentativ sein für eine Ortsfrequenzverteilungsfunktion und/oder zu einer Zeitfrequenzverteilungsfunktion.

Dabei kann die Spektralverteilungsfunktion mittels einer Fourier-Transformation ermittelt werden, die die Spektralverteilung mit der zugeordneten Positionsinformation repräsentiert. Alternativ oder zusätzlich kann die Spektralverteilung auch eine Verteilung von mehreren vordefinierten Frequenzkomponenten, bevorzugt von vorausbestimmten Elementarfunktionen innerhalb eines Fahrstreckenabschnitts umfassen. In diesem Fall kann zu der Spektralverteilung auch eine Gewichtung der Verteilung von Elementarfunktionen innerhalb des Fahrstreckenprofils gehören. Hierbei ist es nicht zwingend notwendig eine Spektralverteilungsfunktion zu ermitteln. Bei dieser Ausgestaltungsvariante können die Fahrstreckenprofildaten einer Spektralverteilung zugeordnet werden, die eine Verteilung bestimmter Eigenschaften des Fahrstreckenprofils in einer äußerst kompakten Form ermöglicht. Dabei können diese Daten bei ihrer späteren Verarbeitung und Nutzung den entsprechenden Fahrstreckenabschnitten zugeordnet werden. Dabei können sehr viele einzelnen Eigenschaften des Fahrstreckenprofils, z.B. mehr als 10, 20, 1000, 10000 pro Fahrstreckenprofil, welches ca. 10 Meter umfasst und ihr jeweiliges gewichtetes Verhältnis zueinander in einer sehr kompakten Form gespeichert oder zu einer Infrastrukturvorrichtung, z.B. zu einem stationären oder mobilen Backend-System, übermittelt werden.

Bei einer späteren Verwendung, die auch in einem oder mehreren anderen Fahrzeugen stattfinden kann, kann ein Bezug zwischen einer bestimmten Verteilung zumindest lokaler physikalischer Fahrbahneigenschaften des Fahrstreckenabschnitts als besonders kompakte Daten empfangen und zu einem oder mehreren, insbesondere zu befahrenden Fahrstreckenabschnitten zugeordnet werden. Somit kann eine Gesamtheit relevanter Daten in Bezug auf einen bestimmten Fahrstreckenabschnitt und im Bezug aufeinander in einer äußerst kompakten Form genutzt werden. Somit können bei einer vordefinierten Datenübertragungsgeschwindigkeit eine viel höhere Detaillierung der Daten, die übertragen werden können, erzielt werden oder eine drastische Einsparung der zu übertragender Datenmengen erzielt werden.

Somit ist die Ermittlung der Spektralverteilung, auch hinsichtlich einer Datenmenge, sehr vorteilhaft, da sehr viele zu einem späteren Zeitpunkt rekonstruierbare ortsbezogene Parameter verarbeitet werden können. Z.B. kann die Amplitude der Höhenschwankungen eines Fahrbahnabschnitts in eine Fahrtrichtung und/oder quer zur Fahrtrichtung in Bezug auf mehrere sogenannte Ortsfrequenzen in Form äußerst kompakter Daten übertragen werden. Je nach Fahrzeug, das später die Daten empfängt, können bestimmte - für dieses Fahrzeug relevante - Ortsfrequenzdaten z.B. in einer vorausschauenden Fahrwerkregelung verarbeitet werden.

Gemäß einer weiteren vorteilhaften Ausgestaltung werden die Fahrstreckenprofildaten mittels eines Fahrzeugs beim Befahren des Fahrstreckenabschnitts ermittelt und die Größe, die die Ortsinformation repräsentiert, wird in Anhängigkeit von einer Bewegungsinformation des Fahrzeugs ermittelt.

Die lokalen physikalischen Fahrbahneigenschaften können sich hierbei beispielsweise auf die unmittelbare Umgebung des Fahrzeugs beziehen. Zumindest eine lokale physikalische Fahrbahneigenschaft kann dabei auch durch eine Reaktion des Fahrzeugs oder bestimmter Teile des Fahrzeugs auf diese lokale physikalische Fahrbahneigenschaft des Fahrstreckenabschnitts repräsentiert sein.

Die Bewegungsinformation kann z.B. auch aus odometrischen Daten des Fahrzeugs, z.B. aus den Radsensoren, und/oder mittels eines globalen Ortungssystems, z.B. GPS, ermittelt werden.

Gemäß einer weiteren vorteilhaften Ausgestaltung werden die Fahrstreckenprofildaten ermittelt abhängig von einem Verlauf einer mechanischen Größe innerhalb des Fahrzeugs.

Die mechanische Größe kann als eine beispielsweise relative mechanische Verschiebung und/oder Verdrehung und/oder Krafteinwirkung einer Komponente des Fahrzeugs, z.B. eines Stoßdämpfers, z.B. in Bezug auf die Fahrgastzelle oder auf Fahrzeugkoordinaten erfasst werden. In modernen Fahrzeugen können mehrere mechanische Größen mit speziellen Sensoren erfasst werden. Dabei können dieselben, insbesondere bereits für andere Zwecke eingesetzte Sensoren genutzt werden, die beispielsweise für eine Fahrwerkregelung Messwerte bereitstellen. Insbesondere kann die mechanische Größe durch die Reaktion einer Fahrwerkregelung des Fahrzeugs auf einen mechanischen Einfluss erfasst werden. Weiterhin kann beispielsweise ein Ortsbezug des Verlaufs der mechanischen Größe ermittelt werden, z.B. mittels erweiterter Navigationsdaten und/oder Radsensorik, so dass der Einfluss der Geschwindigkeit des Fahrzeugs zumindest teilweise verschwindet.

Gemäß einer weiteren vorteilhaften Ausgestaltung werden die Fahrstreckenprofildaten ermittelt abhängig von einem mit Mitteln des Fahrzeugs erfassten Verlauf eines Fahrstreckenreliefs, insbesondere eines oder mehrerer Fahrstreckenneigungswinkel und/oder einer oder mehrerer Fahrstreckenkrümmungen innerhalb des Fahrstreckenabschnitts.

Dabei ist das Fahrstreckenrelief bevorzugt als ein variabler Anteil der Fahrzeughöhe innerhalb einer Fahrstreckenabschnitts zu verstehen. Dabei handelt es sich um Höhendifferenzen von bevorzugt weniger als +/- 5 cm oder +/- 10 cm. Dies ist besonders vorteilhaft, da derartige Höhendifferenzen bei einer späteren Nutzung der Daten mit vorausschauenden Fahrwerksfunktionen für eine exaktere oder effizientere Regelung berücksichtigt bzw. ausgeglichen werden können. Dabei kann eine solche Regelung eine Anpassung der Fahrzeugaktoren auf konkrete lokale physikalische Eigenschaften an ihrer jeweiligen Position ermitteln. Es kann auch eine vorausschauende Ansteuerung der Aktoren erfolgen, welche die lokalen physikalischen Eigenschaften in einem in der nahen Zukunft (z.B. in den nächsten 0,1 - 10 Sekunden) zu befahrenden Fahrstreckenabschnitt berücksichtigt. Somit kann auch die Totzeit der Aktorik, Einschwingzeit mechanischer, elektronischen oder hydraulischen Fahrzeugsysteme vorteilhaft berücksichtigt werden.

Bevorzugt wird das Fahrstreckenrelief als eine ortsbezogene Funktion der, beispielsweise relativen, lokalen Fahrbahnhöhe oder Fahrstreckenkrümmung, insbesondere gegenüber einer Bezugsgröße, die eine durchschnittliche Höhe eines Fahrstreckenabschnitts oder eine durchschnittliche Fahrstreckenkrümmung repräsentiert, dargestellt. Diese kann sich auch auf eine Größe die eine Ortsinformation repräsentiert, bevorzugt eine Längs- und/oder Querrichtung einer Fahrbahn oder auf eine Sensorposition relativ zu einer gemessenen Stelle beziehen.

Der Begriff Fahrstreckenkrümmung bezieht sich auf die Höhenkrümmung, insbesondere auf die Krümmungsmittelpunkte oberhalb oder unterhalb der Fahrstrecke. Dabei kann die Fahrstreckenkrümmung durch eine oder mehrere besonders stark ausgeprägte Krümmungen der Fahrbahn z.B. als Funktion des Verlaufs der Krümmung in Längs- und/oder Querrichtung einer Fahrbahn beschrieben werden. Dabei handelt es sich um Krümmungen mit Radien von bevorzugt 0,1 - 5 Meter. Dies ist besonders vorteilhaft, da solche Fahrbahnkrümmungen bei einer späteren Nutzung der Daten mit vorausschauenden stabilisierenden Funktionen für eine exaktere oder effizientere Regelung berücksichtigt bzw. ausgeglichen werden können.

Bevorzugt wird der Verlauf des Fahrstreckenreliefs als eine, insbesondere zeitdiskrete Funktion erfasst. Der Verlauf des Fahrstreckenreliefs kann Messdaten umfassen, die repräsentativ sind für den Fahrstrecken-Höhenverlauf und/oder Fahrstrecken-Neigungswinkelverlauf und insbesondere absolut oder relativ sind, z.B. Winkeldifferenzen aus einer Sensorperspektive.

Insbesondere kann dabei der Verlauf des Fahrstreckenreliefs aus unterschiedlichen Messverfahren ermittelt werden. Dabei kann der Verlauf des Fahrstreckenreliefs insbesondere ermittelt werden aus einer Kombination aus Daten einer Kamera, und/oder Stereokamera, Messung einer mechanischen Größe an 1-4 Rädern des Fahrzeugs und/oder einer Inertialsensorik des Fahrzeugs.

Gemäß einer weiteren vorteilhaften Ausgestaltung wird eine relative Position des Fahrzeugs auf dem Fahrstreckenabschnitt ermittelt und die Fahrstreckenprofildaten werden abhängig von der relativen Position ermittelt.

Hierbei werden beispielsweise sowohl eine relative Position und eine globale Position des Fahrzeugs ermittelt. Dabei kann auch die globale Position zu der lokalen physikalischen Fahrbahneigenschaft zugeordnet werden. Hierdurch ist eine weitere Datenreduktion möglich.

Gemäß einer weiteren vorteilhaften Ausgestaltung wird jeweils eine relative Position mehrerer Messstellen innerhalb des Fahrstreckenabschnitts ermittelt und die Fahrstreckenprofildaten werden abhängig von den relativen Positionen der Messstellen ermittelt.

Gemäß einer weiteren vorteilhaften Ausgestaltung werden die Fahrstreckenprofildaten ermittelt, indem ein Verlauf von auf das Fahrzeug wirkenden Vertikal- und/oder Querkräften ermittelt wird.

Die auf das Fahrzeug wirkenden Vertikal- und/oder Querkräfte spiegeln beispielsweise nicht nur einen Verlauf der Fahrstrecke wieder, sondern auch, welche Querkräfte auf das Fahrzeug an der betreffenden Stelle Einfluss nehmen. Diese Vertikal- und/oder Querkräfte sind somit beispielsweise auch für andere Zwecke, wie zum Beispiel zur Ermittlung einer Teile-Lebensdauer oder einer jeweiligen Rest-Teil-Lebensdauer von Fahrzeugteilen nutzbar. Eine derart ermittelte Rest-Teil-Lebensdauer mehrerer unterschiedlichen Fahrzeugteile kann, z.B. mittels einer Anzeigevorrichtung oder eines Diagnosegeräts auslesbar und/oder in Zahlen, Symbolen oder grafisch darstellbar sein. Dadurch ist eine deutlich effizientere Nutzung betreffender Fahrzeugteile und eine Verbesserung der Sicherheit möglich. Diese Vertikal- und/oder Querkräfte können alternativ oder zusätzlich auch zu einer adaptiven Einstellung von Regelgrößen für Fahrassistenzsysteme genutzt werden.

Gemäß einer weiteren vorteilhaften Ausgestaltung wird ein Ähnlichkeitsmaß zwischen einem oder mehreren Datenabschnitten der Fahrstreckenprofildaten zu einem oder mehreren vordefinierten Mustern ermittelt, die für vordefinierte Fahrstreckenprofil-Muster repräsentativ sind und in Abhängigkeit von dem ermittelten Ähnlichkeitsmaß wird der Datenabschnitt zu einem der vordefinierten Muster zugeordnet.

Dabei kann ein Datenabschnitt repräsentativ sein für einen Teil der Fahrstreckenprofildaten, beispielsweise einem geometrischen Bereich des Fahrstreckenabschnitts, und z.B. 10 cm - 10 Meter umfassen.

Das Ähnlichkeitsmaß kann eine Ähnlichkeit einer repräsentierten physikalischen Form einer Stelle innerhalb des Fahrstreckenabschnitts umfassen. Ein solcher, insbesondere markanter Datenabschnitt kann z.B. einer von mehreren typischen Formen einer typischen Fahrbahnunebenheit, z.B. einer Grenze zwischen Betonplatten, abgeschrägter Fahrbahnrand, etc. oder auch einem Verlauf eines Bordsteins oder einer Leitplanke entsprechen.

Die Zuordnung des Datenabschnitts zu vordefinierten Mustern erfolgt bevorzugt in Abhängigkeit des maximalen ermittelten Ähnlichkeitsmaßes, z.B. beim Vergleich von Ähnlichkeitsmaßen eines Datenabschnitts und mehreren zur Auswahl stehenden Mustern.

Gemäß einer weiteren vorteilhaften Ausgestaltung wird das Ermitteln der Spektralverteilung im Rahmen eines vorgegebenen Audio-Standards durchgeführt.

Das System weist hierfür insbesondere eine Vorrichtung zur Komprimierung von Audiodaten eines vorgegeben Audioformats auf, das dazu ausgebildet ist die Fahrstreckenprofildaten zu verarbeiten.

Dabei können im Rahmen des Ermittelns der Spektralverteilung beispielsweise Daten derart abgewandelt werden, dass eine ortsbezogene Funktion entsprechend einer vorgegebenen Zuordnung einer Zeitinformation zugeordnet wird, bevorzugt derart, dass eine Länge in einer bestimmten Proportion zu Zeiteinheiten zugeordnet wird und/oder die resultierende Zeitinformation mittels einer oder mehreren Vorrichtungen verarbeitet wird und/oder gespeichert wird.

Der vorgegebene Audio-Standard umfasst beispielsweise MP-3 oder ähnliche Audio-Standards. Bei derartigen Audio-Standards ist die Speicherung, Verarbeitung und auch drahtlose Übertragung von Dateien extrem günstig, weil die entsprechenden Standards etabliert sind und weil die Codierer und Decodierer auch als Hardware inzwischen sehr günstig sind und höchste Kompatibilität, z.B. auch mit Mobilfunk, Internetplattformen und Schnittstellen besteht.

Beispielsweise ist das MP-3-Streaming bestens standardisiert, wodurch Vorteile bei der Handhabung entstehen.

Gemäß einer weiteren vorteilhaften Ausgestaltung wird die Spektralverteilung derart ermittelt dass sie Mehrkanaldaten repräsentiert, wobei ein Kanal der Mehrkanaldaten repräsentativ ist für einen erste Fahrstreckenstreifen und ein Kanal für einen zweiten Fahrstreckenstreifen.

Der jeweilige Fahrstreckenstreifen umfasst beispielsweise eine Fahrspur oder eine gesamte Straßenbreite, beispielsweise falls zur Ermittlung der Streckenprofildaten eine Stereokamera und/oder ein Laserscanner verwendet wird, oder eine Breite eines Fahrzeugreifens, beispielsweise falls zur Ermittlung der Streckenprofildaten eine mechanischen Größe des Fahrzeug verwendet wird.

Gemäß einer weiteren vorteilhaften Ausgestaltung wird das Ermitteln der Spektralverteilung im Rahmen eines vorgegebenen Video-Standards durchgeführt. Hierdurch kann eine sehr detaillierte, mehrdimensionale und zugleich sehr kompakte Darstellung der Spektralverteilung erreicht werden.

Der vorgegebene Video-Standard umfasst beispielsweise MPEG, MP4 oder ähnliche Video-Standards. Anstatt von Pixelwerten ist beispielsweise die lokale physikalische Fahrbahneigenschaft kodiert. Beispielsweise werden, wie bei MP4, nur die Unterschiede innerhalb der Strecke kodiert. Anstatt von RGB - Pixelparameter können z.B. drei lokale physikalische Fahrbahneigenschaften kodiert werden. Die dabei ermittelten Datenpakete entsprechen dabei keinem von einem Menschen einsehbarem oder unmittelbar wahrnehmbaren Multimedia-Inhalten.

Das System weist hierfür insbesondere eine Vorrichtung zur Komprimierung von Videodaten eines vorgegeben Videoformats auf, das dazu ausgebildet ist die Fahrstreckenprofildaten zu verarbeiten.

Gemäß einer weiteren vorteilhaften Ausgestaltung werden abhängig von einem Verlauf der Fahrstreckenprofildaten reduzierte Fahrstreckenprofildaten ermittelt, indem die Quantisierung der Fahrstreckenprofildaten und/oder die Anzahl von Daten der Fahrstreckenprofildaten, die einer Zeiteinheit, beziehungsweise einer Ortseinheit zugeordnet sind, abhängig von dem Verlauf der Fahrstreckenprofildaten eingestellt wird und die Spektralverteilung wird abhängig von den reduzierten Fahrstreckenprofildaten ermittelt.

Hiermit ist es möglich, dass Stellen, an denen sich beispielsweise die lokale physikalische Fahrbahneigenschaft wenig verändert, weniger exakt aufgelöst werden und für das Fahren relevante, z.B. gefährliche Stellen z.B. ein Autobahn-Riss oder ein großes Schlagloch, sehr exakt aufgelöst werden. Hierdurch kann eine weitere Datenreduktion erreicht werden.

Besonders bevorzugt können auch Positionsinformationen zu einer oder mehreren Stellen einer Fahrstrecke die ein bestimmtes Muster oder ein Muster einer vorausbestimmten Art, bevorzugt aus zwei oder mehreren unterschiedlichen Klassen der Fahrstreckenprofildaten, die unterschiedliche lokale physikalische Eigenschaften repräsentieren, ermittelt werden. Somit können auch, z.B. für eine Fahrzeugfahrt relevante oder kritische Stellen, die sich durch eine Überlagerung von an sich tolerierbaren Eigenschaften (z.B. zu einem: niedriger Reibwert und zum anderen: Fahrbahnneigung) ergeben, ermittelt werden.

Dabei können eine oder mehrere Fahrzeugsysteme, insbesondere Fahrwerks- oder Fahrerassistenzsysteme bei einer späteren Nutzung der gespeicherten Daten in Abhängigkeit von solchen Stellen gesteuert werden.

Gemäß einer weiteren vorteilhaften Ausgestaltung werden reduzierte Fahrstreckenprofildaten ermittelt abhängig von mindestens einer oder mehreren vorgegebenen Schwellen und abhängig von den Fahrstreckenprofildaten, indem Daten, die repräsentativ sind für nicht wahrnehmbare physikalische Eigenschaften des Fahrstreckenabschnitts aus den Fahrstreckenprofildaten herausgefiltert werden und die Spektralverteilung wird abhängig von den reduzierten Fahrstreckenprofildaten ermittelt.

Hierdurch kann eine weitere starke Datenmengenreduktion erzielt werden, sowie eine Einsparung von Hardwareleistung im Fahrzeug.

Gemäß einer weiteren vorteilhaften Ausgestaltung entsprechen eine oder mehrere Schwellen einer oder mehreren Wahrnehmbarkeitsschwellen, wobei zumindest zwei Schwellen für unterschiedliche spektrale Anteile unterschiedlich sind.

Gemäß einer weiteren vorteilhaften Ausgestaltung wird ein Fahrzeugprofil bereitgestellt und die Fahrstreckenprofildaten werden abhängig von dem Fahrzeugprofil ermittelt und zwar derart, dass sie fahrzeugunabhängig repräsentativ sind für die lokale physikalische Eigenschaft des Fahrstreckenabschnitts.

Das Fahrzeugprofil beinhaltet beispielsweise die Empfindlichkeit zu verschiedenen spektralen Anteilen und/oder Bereichen der lokalen physikalischen Eigenschaft. Bevorzugt kann die Empfindlichkeit eine Schwingungsübertragungsfunktion von der Fahrbahn auf die Fahrgastzelle umfassen. Insbesondere kann die Schwingungsübertragungsfunktion auch geschwindigkeitsabhängig sein.

Durch die Ermittlung derart, dass, dass die Fahrstreckenprofildaten fahrzeugunabhängig repräsentativ sind für die lokale physikalische Eigenschaft des Fahrstreckenabschnitts, sind die Daten universell und können dazu dienen, die Auswirkungen der Fahrstrecke auf beispielsweise ein ganz anderes Fahrzeug zu ermitteln.

Gemäß einer weiteren vorteilhaften Ausgestaltung repräsentieren die Fahrstreckenprofildaten auch einen veränderlichen Anteil lokaler physikalische Fahrbahneigenschaften eines Fahrstreckenabschnitts in Form einer Verteilungsfunktion der Fahrstreckenfeuchtigkeit und/oder Verteilungsfunktion der Fahrstreckentemperatur und/oder Verteilungsfunktion des Reibungskoeffizienten.

Gemäß einem zweiten Aspekt zeichnet sich die Erfindung aus durch ein Decodierverfahren nach Anspruch 13 sowie ein zu diesem Decodierverfahren korrespondierendes System.

Hierdurch kann die Spektralverteilung mit der zugeordneten Positionsinformation auf einfache Weise weiterverarbeitet werden, beispielsweise um die Daten der Spektralverteilung für Fahrerassistenzsysteme und/oder für andere schon beschriebene Funktionen zu nutzen.

Gemäß einem dritten Aspekt zeichnet sich die Erfindung aus durch ein Codier- und Decodierverfahren. Die Erfindung zeichnet sich aus des Weiteren durch ein System, das zu dem Codier- und Decodierverfahren korrespondiert. Es wird ein Verfahren gemäß dem ersten Aspekt oder gemäß einer vorteilhaften Ausgestaltung des ersten Aspekts durchgeführt. Die Spektralverteilung mit der zugeordneten Positionsinformation wird bereitgestellt. Abhängig von der Spektralverteilung werden die Fahrstreckenprofildaten ermittelt, die der Spektralverteilung zugeordnet sind und die repräsentativ sind für eine lokale physikalische Eigenschaft des Fahrstreckenabschnitts.

Gemäß einem vierten Aspekt zeichnet sich die Erfindung aus durch ein Codier- und Decodierverfahren. Die Erfindung zeichnet sich aus des Weiteren durch ein System, das zu dem Codier- und Decodierverfahren korrespondiert. Es wird zumindest ein Verfahren gemäß dem ersten Aspekt oder gemäß einer vorteilhaften Ausgestaltung des ersten Aspekts in einem ersten Fahrzeug durchgeführt. Die Spektralverteilung mit einer zugeordneten Positionsinformation wird bereitgestellt. Zumindest die Fahrstreckenprofildaten werden in einem zweiten Fahrzeug abhängig von der Spektralverteilung ermittelt, die der Spektralverteilung zugeordnet sind und die repräsentativ sind für eine lokale physikalische Eigenschaft des Fahrstreckenabschnitts.

Gemäß einem nicht erfindungsgemäßen Aspekt werden die Spektralverteilungen mehrerer erster Fahrzeuge aggregiert und die aggregierten Spektralverteilungen für einen oder mehrere zweite Fahrzeuge bereitgestellt.

Gemäß einem weiteren nicht erfindungsgemäßen Aspekt wird in dem zweiten Fahrzeug in Abhängigkeit von der Spektralverteilung mindestens einer der folgenden Verfahrensschritte durchgeführt:

- aktive Regelung von vertikaldynamischer Dämpfung und/oder Beschleunigungseinwirkung auf die Fahrgastzelle des zweiten Fahrzeugs. und/oder, die Kräfte der Lenkrad-Rücckopplung bzw. Kopplung des zweiten Fahrzeugs werden verändert und/oder zumindest teilautomatische Längsführung und/oder Querführung des zweiten Fahrzeugs wird verändert.

Ein besonderer Vorteil ergibt sich insbesondere aus der Verbindung der Daten die permanente und/oder veränderliche physikalischen Eigenschaften repräsentieren. Ein weiterer besonderer Vorteil ergibt sich aus der Verbindung lokaler Daten des Fahrstreckenprofils mit globalen Eigenschaften die sich z.B. auf einen Straßenabschnitt beziehen.

Gemäß einem weiteren Aspekt zeichnet sich die Erfindung aus durch ein Computerprogramm nach Anspruch 18.

Das Computerprogrammprodukt umfasst insbesondere ein von der Datenverarbeitungsvorrichtung lesbares Medium, auf dem der Programmcode gespeichert ist.

Gemäß einem weiteren Aspekt der Erfindung werden alle oder mehrere wesentliche Schritte des Verfahrens innerhalb eines Fahrzeugs oder mehrerer Fahrzeuge durchgeführt.

Bei dem Fahrzeug handelt es sich im Rahmen der Erfindung bevorzugt um ein Kraftfahrzeug oder Motorrad. Somit entstehen mehrere oben diskutierte Vorteile und mehrere weitere für den Fachmann nachvollziehbare Vorteile. Das Fahrzeug kann auch ein Wasserfahrzeug sein, wobei ein Teil des Meeresbodens und/oder der Wasserschichten der Fahrstrecke entspricht, die z.B. wirtschaftlich genutzt werden können. Das Fahrzeug kann auch ein Luft- oder Raumfahrzeug sein, wobei die entsprechende Fahrstrecke ein Teil einer Planetenoberfläche, Atmosphärenschichten oder der Planetenschichten ist. Solche Anwendungen, z.B. zur Erfassung und Übertragung der (bis zu feinen Details aufgelösten) lokalen physikalischen Eigenschaften von Planeten oder sonstiger Himmelskörper sind sehr vorteilhaft, weil die Fahrstreckenprofildaten in einer äußerst kompakten Form übertragen werden können.

Ausführungsbeispiele der Erfindung sind im Folgenden anhand der schematischen Zeichnung näher erläutert.

Es zeigt:

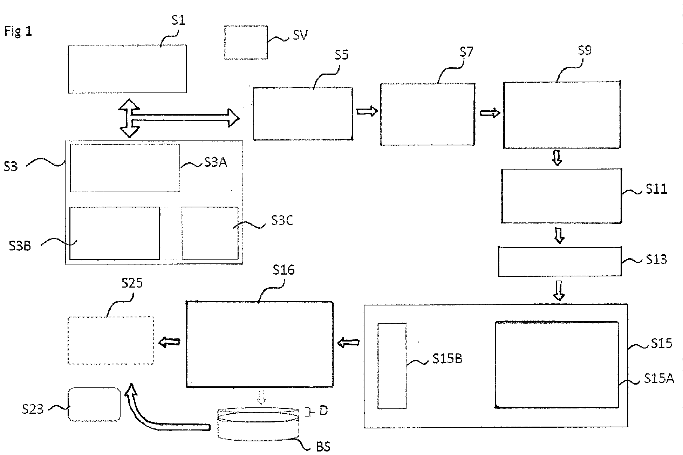

Figur 1    ein Ablaufdiagramm eines Programms zum Codieren und Decodieren.

Figur 1 zeigt ein Ablaufdiagramm eines Programms zum Codieren und Decodieren. Das Programm kann beispielsweise mittels einer Fahrzeugsteuervorrichtung SV abgearbeitet werden, die insbesondere mindestens eine Recheneinheit, einen Programm- und Datenspeicher sowie beispielsweise eine oder mehrere Kommunikationsschnittstellen aufweist und die in einem Fahrzeug angeordnet ist. Der Programm- und Datenspeicher und die Recheneinheit der Fahrzeugsteuervorrichtung können in einer Baueinheit und/oder verteilt auf mehrere Baueinheiten ausgebildet sein.

Das Programm kann beispielsweise alternativ oder zusätzlich mittels einer externen Steuervorrichtung abgearbeitet werden, die insbesondere mindestens eine Recheneinheit, einen Programm- und Datenspeicher sowie beispielsweise eine oder mehrere Kommunikationsschnittstellen aufweist und die beispielsweise in einem Server, insbesondere einem Backend-Server BS, und/oder einem weiteren Fahrzeug angeordnet ist. Der Programm- und Datenspeicher und die Recheneinheit des externen Steuervorrichtung können in einer Baueinheit und/oder verteilt auf mehrere Baueinheiten ausgebildet sein.

Das Programm kann auch verteilt mittels der Fahrzeugsteuervorrichtung SV und der externen Steuervorrichtung abgearbeitet werden. So können insbesondere Daten in der Fahrzeugsteuervorrichtung SV ermittelt werden und an die externe Steuervorrichtung übertragen werden und dort weiterverarbeitet werden. Ein System zum Codieren und/oder Decodieren und/oder insbesondere zur Verarbeitung von Daten eines Fahrstreckenprofils, die lokale physikalische Fahrbahneigenschaften eines Fahrstreckenabschnitts repräsentieren umfasst somit insbesondere die Fahrzeugsteuervorrichtung SV und/oder die externe Steuervorrichtung.

Nach dem Starten des Programms wird das Programm in einem Schritt S1 fortgesetzt, nachdem beispielsweise Variablen initialisiert wurden.

In dem Schritt S1 wird eine Positionsinformation ermittelt, die repräsentativ ist für eine globale Position des Fahrstreckenabschnitts. Hierfür wird insbesondere eine Position des Fahrzeugs ermittelt, beispielsweise mittels eines satellitenbasierten Navigationssystems, wie z.B. GPS. Zusätzlich kann beispielsweise die Position des Fahrzeugs innerhalb einer Spur, z.B. auch relativ zu Markierungen und/oder Fahrbahngrenzen ermittelt werden.

In einem Schritt S3 werden Fahrstreckenprofildaten ermittelt, die repräsentativ sind für lokale physikalische Fahrbahneigenschaften des Fahrstreckenabschnitts. Dabei werden die Fahrstreckenprofildaten, die repräsentativ sind für lokale physikalische Fahrbahneigenschaften des Fahrstreckenabschnitts in Form einer asynchronen Funktion ermittelt.

In diesem Beispiel stellt die asynchrone Funktion einen lokal variablen Anteil einer Größe, die repräsentativ ist für lokale physikalische Fahrbahneigenschaften des Fahrstreckenabschnitts, in einer zeitdiskreten Form dar.
Der Gleichanteil dieser Größe wird für den Fahrstreckenabschnitt ebenfalls ermittelt. Dieser kann mit jeweils nur einem Zahlenwert bzw. Vektorwert dem Fahrstreckenabschnitt zugeordnet und zusammen zu der im Rahmen des Verfahrens ermittelten Spektralverteilung weiterverarbeitet und gespeichert werden. Im Vergleich zu dem asynchronen Anteil der Fahrstreckenprofildaten erfordert die Speicherung des Gleichanteils lediglich einen Bruchteil der Datenmenge die zu einer Speicherung aller lokalen Fahrstreckendaten erforderlich wäre. Daher kann diese auch mit Hilfe konventioneller Verfahren gespeichert oder verarbeitet werden.

Hierfür wird insbesondere in einem Schritt S3A beispielsweise eine direkte kontaktlose Profilerfassung des Fahrstreckenabschnitts über eine perzeptive Sensorik ermittelt, beispielsweise mittels einer Stereokamera, einem Laserscanner, einem Motion-Stereo-Verfahren und/oder einer Monokamera.

Besonders bevorzugt kann das Ermitteln der Fahrstreckenprofildaten mit einer Vorrichtung erfolgen, die:

- elektromagnetische Wellen, z.B. Radarwellen oder Licht mit sichtbaren oder unsichtbaren spektralen Anteilen aussendet bzw. emittiert, oder Druckwellen, z.B. Ultraschallwellen aussendet, und
- zu einem Erfassung und Auswertung der Reflektion der Wellen von der Fahrstrecke ausgestaltet ist.

Alternativ oder zusätzlich wird hierfür in einem Schritt S3B beispielsweise eine Profilerfassung durch physische Einflüsse auf das Fahrzeug ermittelt, beispielsweise mittels erfasster Beschleunigungen und/oder Kräfte auf die Fahrgastzelle oder einzelne Teile des Fahrzeugs, z.B. Achsen des Fahrzeugs.

Alternativ oder zusätzlich werden die in dem Schritt S3B ermittelten Fahrstreckenprofildaten in einem Schritt S3C in eine Ortsfunktion umgerechnet.

In einem optionalen Schritt S5 werden die Fahrstreckenprofildaten in ein vorgegebenes Koordinatensystem überführt, beispielswiese entlang und/oder quer zu einem Strecken oder Spurverlauf.

In einem optionalen Schritt S7 werden reduzierte Fahrstreckenprofildaten ermittelt abhängig von mindestens einer oder mehreren vorgegebenen Schwellen und abhängig von den Fahrstreckenprofildaten, indem Daten, die repräsentativ sind für nicht (z.B. durch die kinästhetische Wahrnehmung des Fahrers des Fahrzeugs) wahrnehmbare physikalische Eigenschaften des Fahrstreckenabschnitts aus den Fahrstreckenprofildaten herausgefiltert werden.

In einem optionalen Schritt S9 wird ein Ähnlichkeitsmaß zwischen einem oder mehreren Datenabschnitten der Fahrstreckenprofildaten zu einem oder mehreren vordefinierten Mustern ermittelt, die für vordefinierte Fahrstreckenprofil-Muster repräsentativ sind und in Abhängigkeit von dem ermittelten Ähnlichkeitsmaß wird der Datenabschnitt zu einem der vordefinierten Mustern zugeordnet. Die vordefinierten Muster umfassen beispielsweise vorgegebene Spaltenfunktionen, Winkelverläufe und/oder vorgegebene Standard-Schlaglöcher.

In einem optionalen Schritt S11 wird ermittelt ob die Fahrstreckenprofildaten wiederholte und/oder ähnliche Sequenzen aufweisen und die wiederholten und/oder ähnlichen Sequenzen werden als Wiederholung codiert, insbesondere durch Anwendung von einer Hufmann-Codierung.

In einem optionalen Schritt S13 wird ein Fahrzeugprofil bereitgestellt und die Fahrstreckenprofildaten werden abhängig von dem Fahrzeugprofil ermittelt und zwar derart, dass sie fahrzeugunabhängig repräsentativ sind für die lokale physikalische Eigenschaft des Fahrstreckenabschnitts. Der Schritt S13 kann insbesondere mittels der externen Steuervorrichtung abgearbeitet werden.

In einem Schritt S15 wird eine Spektralverteilung abhängig von den Fahrstreckenprofildaten und/oder den reduzierten Fahrstreckenprofildaten ermittelt, in Bezug auf eine Größe, die eine Ortsinformation repräsentiert und die Spektralverteilung wird der Positionsinformation zugeordnet.

Hierfür wird insbesondere in einem Schritt S15A eine Fourier-Analyse angewandt, bevorzugt als eine Spektral-Darstellung der Streckenprofildaten als eine Ortsfunktion.

Insbesondere erfolgt die Ermittlung der Spektralverteilungsfunktion mittels an sich bekannter zeitdiskreter Verfahren, die eine Annäherung an den Wert folgender Formel liefern:

$$f(t) = \frac{1}{\sqrt{2\pi}} \int_{-\infty}^{\infty} a(\omega) e^{i\omega t} \, d\omega$$

mit

$$a(\omega) = \frac{1}{\sqrt{2\pi}} \int_{-\infty}^{\infty} f(t) e^{-i\omega t} \, dt$$

mit $\omega$ = Kreisfrequenz, t = Zeit, f(t)= Signal und $a(\omega)$ = fourier-transformierte Kreisfrequenz.

Insbesondere erfolgt die Ermittlung der Spektralverteilung in einem Schritt S15B mittels Anwendung einer ortsdiskreten Cosinustransformation.

In einem optionalen Schritt S16 wird die Spektralverteilung mit der zugeordneten Positionsinformation dauerhaft gespeichert beispielswiese im Fahrzeug und/oder in dem Backendserver BS. Bevorzugt wird ein Abgleich mit bestehenden Daten durchgeführt und es werden nur Differenzdaten D, die sich von den bereits vorhandenen Daten unterscheiden, gespeichert.

In einem optionalen Schritt S25 kann die Spektralverteilung mit der zugeordneten Positionsinformation beispielsweise für Fahrzeugfunktionen genutzt werden.

In einer vereinfachten Variante des Verfahrens kann auch eine diskret dargestellte Spektralverteilung ermittelt werden, die z.B. nur mehr als 3 und weniger als 30 unterschiedliche Spektralanteile der lokalen physikalischen Fahrbahneigenschaften jedes von mehreren Fahrstreckenabschnitte der Fahrstrecke umfasst. Dabei können diese Spektralanteile repräsentierend für ein Ortsfrequenzband sein.

Insbesondere wird hierfür in einem Schritt S23 die Spektralverteilung wieder decodiert, indem abhängig von der Spektralverteilung Fahrstreckenprofildaten ermittelt werden, die der Spektralverteilung zugeordnet sind und die repräsentativ sind für eine lokale physikalische Eigenschaft des Fahrstreckenabschnitts. Dabei wird in diesem Beispiel ein (nicht explizit grafisch dargestellter) Schritt der Zuordnung des dekodierten variablen Anteils der Fahrstreckenprofildaten, die repräsentativ sind für lokale physikalische Fahrbahneigenschaften des Fahrstreckenabschnitts zu einer Bezugsgröße durchgeführt. Bei der Bezugsgröße handelt es sich dabei um die bei der Codierung ermittelte Bezugsgröße oder um eine mit Mitteln eines zweiten Fahrzeugs ermittelte Bezugsgröße. Die Bezugsgröße kann auch eine globale Größe sein, die für einen Fahrstreckenabschnitt oder für eine Fahrstrecke gilt.

Die Spektralverteilung bzw. Spektralverteilungsfunktion kann dabei zusammen mit den ihr zugeordneten Positionsinformation und ggf. auch der Funktion der Bezugsgröße als Datenpakete abgelegt und zu einem wesentlich späteren Zeitpunkt genutzt werden. Dabei können aus den Datenpaketen die Fahrstreckenprofildaten zu einer vorgegebenen Positionsinformation oder eine Positionsinformation zu den vorgegebenen Fahrstreckenprofildaten ermittelt werden.

Das Verfahren kann ebenfalls das Ermitteln einer oder mehreren Positionsinformationen umfassen, die einem bestimmten Muster oder einem Muster einer bestimmter Art, welches von lokalen physikalischen Fahrbahneigenschaften gebildet wird, entsprechen. Dabei können solche Muster besonders bevorzugt unterschiedliche Klassen der Fahrstreckenprofildaten umfassen.

Das Verfahren kann auf zwei oder mehrere unterschiedliche Klassen der Fahrstreckenprofildaten angewandt werden, z.B.

- Verlauf der lokalen Fahrbahnhöhe und/oder Fahrbahnkrümmung,
- Verlauf der Querkräfte, die auf ein Fahrzeug beim Befahren eines Fahrstreckenabschnitts wirken, die bevorzugt nach dem jeweiligen Geschwindigkeitswert des Fahrzeugs normiert sind ,
- Verlauf des lokalen Reibungskoeffizienten,
- Verlauf der lokalen Temperatur der Fahrbahn,
- Verlauf zumindest einer mechanischen Kraft die auf eine Komponente des Fahrwerks des Fahrzeugs wirkt.

Bezugszeichenliste:

BS    Backendserver
D    Differenzdaten
SV    Fahrzeugsteuervorrichtung

Bezugszeichenliste

BS    Backendserver
D    Differenzdaten
SV    Fahrzeugsteuervorrichtung

**Patentansprüche**

1. Verfahren zur Verarbeitung von Daten eines Fahrstreckenprofils, die lokale physikalische Fahrbahneigenschaften eines Fahrstreckenabschnitts repräsentieren, und bei dem eine Positionsinformation ermittelt wird (S1), die repräsentativ ist für eine globale Position des Fahrstreckenabschnitts, und wobei Fahrstreckenprofildaten ermittelt werden (S3), welche repräsentativ sind für lokale physikalische Fahrbahneigenschaften des Fahrstreckenabschnitts, und wobei weiterhin eine von den Fahrstreckenprofildaten abhängige Zuordnung zur Positionsinformation erfolgt, **dadurch gekennzeichnet, dass** eine Spektralverteilung abhängig von den Fahrstreckenprofildaten ermittelt wird (S15), in Bezug auf eine Größe, die eine Ortsinformation repräsentiert, und dass diese Spektralverteilung der Positionsinformation zugeordnet wird.

2. Verfahren nach Anspruch 1, umfassend das Ermitteln einer asynchronen Funktion welche die Fahrstreckenprofildaten repräsentiert, wobei die asynchrone Funktion die Unterschiede lokaler Fahrbahneigenschaften von einer, insbesondere ortsabhängigen, Bezugsgröße repräsentiert.

3. Verfahren nach einem der vorhergehenden Ansprüche, bei dem die Spektralverteilung der Positionsinformation mittels eines vorgegebenen Koordinatensystems zugeordnet wird und zwar derart, dass zumindest ein die Ortsinformation repräsentierender Wert einer Länge zugeordnet wird, bezogen auf eine Richtung im Wesentlichen entlang eines Verlaufs einer Fahrstrecke und/oder einer Breite zugeordnet wird, bezogen auf eine Richtung im Wesentlichen senkrecht zu einem Verlauf einer Fahrstrecke.

4.  Verfahren nach einem der vorhergehenden Ansprüche, wobei die Fahrstreckenprofildaten repräsentativ sind für einen Verlauf der Fahrstreckenhöhe und/oder der Neigungswinkel des Fahrstreckenabschnitts.

5.  Verfahren nach einem der vorhergehenden Ansprüche mit Ermittlung der Fahrstreckenprofildaten mittels eines Fahrzeugs beim Befahren des Fahrstreckenabschnittes, wobei die Fahrstreckenprofildaten abhängig von einem Verlauf einer mechanischen Größe innerhalb des Fahrzeugs und/oder abhängig von einem mit Mitteln des Fahrzeugs erfassten Verlauf eines Fahrstreckenreliefs ermittelt werden.

6.  Verfahren nach Anspruch 5, wobei die Fahrstreckenprofildaten aus den auf das Fahrzeug wirkenden Vertikal- und/oder Querkräften ermittelt werden.

7.  Verfahren nach einem der vorhergehenden Ansprüche, bei dem die Spektralverteilung der Positionsinformation zugeordnet wird, indem abhängig von der Spektralverteilung und der Positionsinformation eine Spektralverteilungsfunktion ermittelt wird, bei der als Argument eine Größe, die die Ortsinformation repräsentiert einem vorgegebenen Koordinatensystem zugeordnet wird.

8.  Verfahren nach einem der vorhergehenden Ansprüche, wobei ein Ähnlichkeitsmaß zwischen einem oder mehreren Datenabschnitten der Fahrstreckenprofildaten zu einem oder mehreren vordefinierten Mustern ermittelt wird, die für vordefinierte Fahrstreckenprofil-Muster repräsentativ sind und in Abhängigkeit von dem ermittelten Ähnlichkeitsmaß der Datenabschnitt zu einem der vordefinierten Muster zugeordnet wird.

9.  Verfahren nach einem der vorhergehenden Ansprüche, wobei das Ermitteln der Spektralverteilung im Rahmen eines vorgegebenen Audio-Standards und/oder Video-Standards durchgeführt wird.

10. Verfahren nach einem der vorhergehenden Ansprüche, wobei abhängig von einem Verlauf der Fahrstreckenprofildaten reduzierte Fahrstreckenprofildaten ermittelt werden, indem die Quantisierung der Fahrstreckenprofildaten und/oder die Anzahl von Daten der Fahrstreckenprofildaten, die einer Zeiteinheit, beziehungsweise einer Ortseinheit zugeordnet sind, abhängig von dem Verlauf der Fahrstreckenprofildaten eingestellt wird und die Spektralverteilung abhängig von den reduzierten Fahrstreckenprofildaten ermittelt wird.

11. Verfahren nach einem der vorhergehenden Ansprüche, wobei reduzierte Fahrstreckenprofildaten ermittelt werden abhängig von mindestens einer oder mehreren vorgegebenen Schwellen und abhängig von den Fahrstreckenprofildaten, indem Daten, die repräsentativ sind für nicht wahrnehmbare physikalische Eigenschaften des Fahrstreckenabschnitts aus den Fahrstreckenprofildaten herausgefiltert werden und die Spektralverteilung abhängig von den reduzierten Fahrstreckenprofildaten ermittelt wird.

12. Verfahren nach einem der vorangegangenen Ansprüche, wobei ein Fahrzeugprofil bereitgestellt wird und die Fahrstreckenprofildaten abhängig von dem Fahrzeugprofil derart ermittelt werden, dass sie fahrzeugunabhängig repräsentativ für die lokale physikalische Eigenschaft des Fahrstreckenabschnitts sind.

13. Decodierverfahren bei dem aus einer bereitgestellten und abhängig von Fahrstreckenprofildaten ermittelten Spektralverteilung mit einer zugeordneten Positionsinformation, welche repräsentativ für eine globale Position eines Fahrzeugs innerhalb eines Fahrstreckenabschnitts ist, der Spektralverteilung zugeordnete Fahrstreckenprofildaten ermittelt und bereitgestellt werden (S23), und wobei die Fahrstreckenprofildaten eine lokale physikalische Eigenschaft des besagten Fahrstreckenabschnitts repräsentieren.

14. Codier- und Decodierverfahren bei dem ein Verfahren nach einem der Ansprüche 1-12 durchgeführt wird und die Spektralverteilung mit einer zugeordneten Positionsinformation bereitgestellt wird und abhängig von der Spektralverteilung die Fahrstreckenprofildaten ermittelt werden (S3), die der Spektralverteilung zugeordnet sind und die repräsentativ sind für eine lokale physikalische Eigenschaft des Fahrstreckenabschnitts.

15. Codier und Dekodierverfahren bei dem ein Verfahren nach einem der Ansprüche 1-12 in einem ersten Fahrzeug durchgeführt wird und die Spektralverteilung mit einer zugeordneten Positionsinformation bereitgestellt wird, und zumindest die Fahrstreckenprofildaten in einem zweiten Fahrzeug abhängig von der Spektralverteilung ermittelt werden, die der Spektralverteilung zugeordnet sind und die repräsentativ sind für eine lokale physikalische Eigenschaft des Fahrstreckenabschnitts.

16. System, ausgebildet ein Verfahren nach einem der Ansprüche 1 - 15 auszuführen.

17. System nach Anspruch 16, aufweisend eine Vorrichtung zur Komprimierung von Audio- und/oder Videodaten eines vorgegebenen Audio- und/oder Videoformats, welches dazu ausgebildet ist die Fahrstreckenprofildaten zu verarbeiten.

18. Computerprogramm oder Computerprogrammprodukt umfassend ausführbaren Programmcode, wobei der Programmcode oder das Computerprogramm ausgebildet ist, bei Durchführung oder Ausführung durch eine Datenverarbeitungsvorrichtung ein Verfahren nach einem der Ansprüche 1-15 durchzuführen.

**Claims**

1. A method for processing data of a route profile which represent local physical roadway properties of a route segment, wherein position information is determined (S1), which is representative of a global position of the route segment, and wherein route profile data are determined (S3), which are representative of local physical roadway properties of the route segment, and wherein an assignment to the position information depending on the route profile data is performed, **characterised in that** a spectral distribution depending on the route profile data is determined (S15), in relation to a variable that represents location information, and **in that** this spectral distribution is assigned to the position information.

2. A method according to claim 1, further comprising a step of determining an asynchronous function that represents the route profile data, wherein the asynchronous function represents the differences of local roadway properties from a reference variable, which more especially is location-dependent.

3. A method according to either one of the preceding claims, in which the spectral distribution is assigned to the position information by means of a predefined coordinate system, more specifically such that at least one value representing the location information is assigned to a length, based on a direction substantially along the progression of a route, and/or is assigned to a width, based on a direction substantially perpendicular to the progression of a route.

4. A method according to any one of the preceding claims, wherein the route profile data are representative of the progression of the route height and/or the angle of inclination of the route segment.

5. A method according to any one of the preceding claims, with determination of the route profile data by means of a vehicle when traveling along the route segment, wherein the route profile data are determined depending on the progression of a mechanical variable within the vehicle and/or depending on the progression of a route relief as detected by means of the vehicle.

6. A method according to claim 5, wherein the route profile data are determined from the vertical and/or transverse forces acting on the vehicle.

7. A method according to any one of the preceding claims, wherein the spectral distribution is assigned to the position information by a spectral distribution function being determined depending on the spectral distribution and the position information, in which spectral distribution function, as argument, a variable that represents the location information is assigned to a predefined coordinate system.

8. A method according to any one of the preceding claims, wherein a measure of similarity is determined between one or more data segments of the route profile data and one or more predefined patterns that are representative of predefined route profile patterns, and
the data segment is assigned to one of the predefined patterns depending on the determined measure of similarity.

9. A method according to any one of the preceding claims, wherein the spectral distribution is determined within the scope of a predefined audio standard and/or video standard.

10. A method according to any one of the preceding claims, wherein reduced route profile data are determined depending on a progression of the route profile data in that the quantisation of the route profile data, and/or the number of data items of the route profile data which are assigned to a temporal unit or a location unit are/is set depending on the progression of the route profile data, and the spectral distribution is determined depending on the reduced route profile data.

11. A method according to any one of the preceding claims, wherein reduced route profile data are determined depending on at least one or more predefined thresholds and depending on the route profile data in that data representative of non-perceptible physical properties of the route segment are filtered out of the route profile data, and the spectral distribution is determined depending on the reduced route profile data.

12. A method according to any one of the preceding claims, wherein a vehicle profile is provided, and the route profile data are determined depending on the vehicle profile, such that they are representative of the local physical property of the route segment vehicle-independently.

13. A decoding method, in which, on the basis of a provided spectral distribution determined depending on route profile data and having assigned position information which is representative of a global position of a vehicle within a route segment, route profile data assigned to the spectral distribution are determined and provided (S23), wherein the route profile data represent a local physical property of said route segment.

14. A coding and decoding method in which a method according to any one of claims 1-12 is performed and the spectral distribution is provided with assigned position information and the route profile data which are assigned to the spectral distribution and which are representative for a local physical property of the route segment are determined (S3) depending on the spectral distribution.

15. A coding and decoding method in which a method according to any one of clams 1-12 is carried out in a first vehicle and the spectral distribution is provided with assigned position information, and at least the route profile data that are assigned to the spectral distribution and that are representative of a local physical property of the route segment are determined in a second vehicle depending on the spectral distribution.

16. A system designed to carry out a method according to any one of claims 1-15.

17. A system according to claim 16, comprising a device for compressing audio and/or video data of a predefined audio and/or video format, which system is designed to process the route profile data.

18. A computer program or computer program product comprising executable program code, wherein the program code or the computer program is designed, when run or executed by a data processing device, to carry out a method according to any one of claims 1-15.

**Revendications**

1. Procédé de traitement de données d'un profil d'une route qui représentent des caractéristiques physiques locales de la chaussée d'un segment de route, et selon lequel on détermine (S1) une information de position représentative de la position globale du segment de route, et on détermine des données du profil de la route (S3) qui sont représentatives des caractéristiques physiques locales de la chaussée du segment de route, et en outre, on effectue une association dépendant des données du profil de la route à l'information de position,
**caractérisé en ce qu'**
on détermine (S15) une distribution spectrale en fonction des données du profil de la route par rapport à une grandeur qui représente une information de lieu, et on associe cette distribution spectrale à l'information de position.

2. Procédé conforme à la revendication 1, comprenant la détermination d'une fonction asynchrone qui représente les données du profil de la route, et la fonction asynchrone représente les différences entre des caractéristiques locales de la chaussée par rapport à une grandeur de référence en particulier dépendant du lieu.

3. Procédé conforme à l'une des revendications précédentes, selon lequel la distribution spectrale est associée à l'information de position au moyen d'un système de coordonnées prédéfinis, et ce de sorte qu'au moins une valeur représentant l'information de lieu soit associée à une longueur, par rapport à la direction essentiellement longitudinale du tracé de la route et/ou à une largeur, par rapport à la direction essentiellement perpendiculaire au tracé de la route.

4. Procédé conforme à l'une des revendications précédentes, selon lequel les données du profil de la route sont représentatives pour le tracé de la hauteur de la route et/ou de l'angle d'inclinaison du segment de la route.

5. Procédé conforme à l'une des revendications précédentes, permettant de déterminer les données de profil de la route au moyen d'un véhicule lors du parcours du segment de la route, selon lequel les données du profil de la route sont déterminées en fonction des variations d'une grandeur mécanique à l'intérieur du véhicule et/ou en fonction des variations du relief de la route détecté avec des moyens du véhicule.

6. Procédé conforme à la revendication 5, selon lequel les données du profil de la route sont déterminées à partir des forces verticales et/ou des forces transversales agissant sur le véhicule.

7. Procédé conforme à l'une des revendications précédentes, selon lequel la distribution spectrale est associée à l'information de position du fait que, en fonction de la distribution spectrale et de l'information de position on détermine une fonction de distribution spectrale dans laquelle, en tant qu'argument, une grandeur qui représente l'information de lieu est associée à un système de coordonnées prédéfinis.

8. Procédé conforme à l'une des revendications précédentes,
selon lequel on détermine une mesure de similitude entre au moins un segment des données du profil de la route et au moins un modèle prédéfini représentatifs de modèles de profil de route prédéfinis, et en fonction de la mesure de similitude déterminée on associe le segment de données à l'un des modèles prédéfinis.

9. Procédé conforme à l'une des revendications précédentes,
selon lequel la détermination de la distribution spectrale est effectuée dans le cadre d'un standard audio prédéfini et/ou d'un standard vidéo prédéfini.

10. Procédé conforme à l'une des revendications précédentes,
selon lequel en fonction des variations des données du profil de la route, on détermine des données du profil de la route réduites du fait que l'on règle la quantification des données du profil de la route et/ou le nombre de données du profil de la route qui sont associées à une unité de temps ou à une unité de lieu en fonction de variations des données du profil de la route, et on détermine la distribution spectrale en fonction des données du profil de la route réduites.

11. Procédé conforme à l'une des revendications précédentes,
selon lequel on détermine des données du profil de la route réduites en fonction d'au moins un seuil prédéfini et en fonction des données du profil de la route, du fait que des données qui sont représentatives de caractéristiques physiques non perceptibles du segment de route sont éliminées par filtrage des données du profil de la route, et la distribution spectrale est déterminée en fonction des données du profil de la route réduites.

12. Procédé conforme à l'une des revendications précédentes,
selon lequel le profil du véhicule est fourni, et les données du profil de la route sont déterminées en fonction du profil du véhicule de sorte qu'elle soient, en fonction du véhicule, représentatives des caractéristiques physiques locales du segment de route.

13. Procédé de décodage,
selon lequel on détermine et on fournit (S23) des données du profil de la route associées à une distribution spectrale, à partir d'une distribution spectrale fournie et déterminée en fonction de données du profil de la route, avec une information de position associée qui est représentative de la position globale du véhicule dans un segment de route, et les données du profil de la route représentent une caractéristique physique locale de ce segment de route.

14. Procédé de codage et de décodage,
selon lequel on met en oeuvre un procédé conforme à l'une des revendications 1 à 12, et la distribution spectrale est fournie avec une information de position associée, et en fonction de la distribution spectrale on détermine (S3) les données du profil de la route qui sont associées à la distribution spectrale, et sont représentatives d'une caractéristique physique locale du segment de la route.

15. Procédé de codage et de décodage,
selon lequel on met en oeuvre un procédé conforme à l'une des revendications 1 à 12, dans un premier véhicule, on fournit la distribution spectrale avec une information de position associée, et on détermine dans un second véhicule, en fonction de la distribution spectrale, au moins les données du profil de la route qui sont associées à la distribution spectrale, et sont représentatives d'une caractéristique physique locale du segment de route.

16. Système réalisé pour permettre la mise en oeuvre du procédé conforme à l'une des revendications 1 à 15.

17. Système conforme à la revendication 16,
comportant un dispositif permettant de comprimer des données audio et/ou des données vidéo d'un format audio et/ou d'un format vidéo prédéfini(s), qui est réalisé pour permettre de traiter les données du profil de la route.

18. Programme d'ordinateur ou produit-programme d'ordinateur, comprenant des instructions de code de programme exécutables, les instructions de code de programme ou le programme d'ordinateur étant réalisé(es) pour permettre la mise en oeuvre du procédé conforme à l'une des revendications 1 à 15, lors de son exécution par un dispositif de traitement de données.

Fig 1